# EUROPEAN PATENT SPECIFICATION

(11) **EP 3 471 977 B1**
(45) Date of publication and mention of the grant of the patent: **30.12.2020**
(21) Application number: 17728527.7
(22) Date of filing: 06.06.2017
(51) Int. Cl.: B60H 1/00, F16B 17/00, F16B 5/06, F16B 5/00

(54) **ASSEMBLY AND METHODS FOR FASTENING AND FOR REPLACING A CONTROL MOTOR IN A VEHICLE HEATING, VENTILATING AND/OR AIR-CONDITIONING SYSTEM**
ANORDNUNG UND VERFAHREN ZUR BEFESTIGUNG UND ZUM ERSETZEN EINES STEUERUNGSMOTORS IN EINEM FAHRZEUGHEIZUNGS-, -LÜFTUNGS- UND/ODER KLIMATISIERUNGSSYSTEM
ENSEMBLE MOTEUR DE COMMANDE ET PROCÉDÉS DE FIXATION ET DE REMPLACEMENT D'UN MOTEUR DE COMMANDE DANS UN SYSTÈME DE CHAUFFAGE, DE VENTILATION ET/OU DE CLIMATISATION DE VÉHICULE

(30) Priority: 17.06.2016 DE 102016111145
(43) Date of publication of application: 24.04.2019
(73) Proprietor: Valeo Klimasysteme GmbH, 96476 Bad Rodach (DE)
(72) Inventor: STEUERWALD, Markus, 96476 Bad Rodach (DE); FUHRMANN, Lutz, 96476 Bad Rodach (DE)
(74) Representative: Tran, Chi-Hai
(86) International application number: PCT/EP2017/063646
(87) International publication number: WO 2017/215974

(56) References cited:
- DE-A1- 10 011 236
- FR-A1- 2 743 118

## Description

The invention relates to a motor fastening for a control motor in a vehicle heating, ventilating and/or air-conditioning system (also called vehicle air-conditioning system for short below), to a control motor assembly and to methods for fastening and for replacing a control motor.

In modern vehicles, there are diverse setting options for adapting the airflow to and in the vehicle interior. This is achieved by flaps which are arranged in air ducts or distributor housings and are moved into different positions depending on the desired temperature, intensity or distribution of the airflow in the vehicle interior. The adjustment of the respective flap is normally brought about by a control motor which is connected to the flap spindle and is arranged on the outside of the air duct or of the distributor housing. Examples of control motors which can be used are stepper motors, servomotors or other suitable electric drives.

Documents FR2743118 and DE10011236 disclose fixing pins for control motors in air conditioning systems.

In general, it is endeavoured to fix the control motor in the vehicle air-conditioning system with as little outlay on installation as possible in order to save on installation time in particular during mass manufacturing. For the fixing of the stepper motor, screws are dispensed with as far as possible here, and therefore, for example, latching connections or bayonette-type closure systems are used. If, however, a control motor has to be replaced later on, it is complicated to release such fastenings again without destruction in order to remove the old motor and to insert a new motor.

It is the object of the invention to permit a simple initial installation of a control motor in a vehicle air-conditioning system and nevertheless to ensure a simple exchange of the control motor.

This is achieved with a motor fastening of a control motor in a vehicle heating, ventilating and/or air-conditioning system according to claim 1, with a plate-like support on which at least one fixing pin is provided which protrudes from the support and serves to be plugged through a through opening in the control motor. The fixing pin has a free end portion which protrudes beyond the through opening in the control motor and which, in the mounted state, has a radially thickened head for the axial holding of the control motor. The head is an integral part of the fixing pin. The fastening of the control motor takes place here, during the initial installation of the control motor, preferably exclusively via the fixing pins themselves, without further plug-in, latching or screw connections. The initial installation can thus be carried out with few working steps.

The support can be a separate component, but can also be already integrated in a housing wall, for example of an air duct or of a distributor housing.

The fixing pin or the fixing pins is/are preferably produced from a suitable plastic integrally with the support in an injection-moulding process.

The fixing pin is normally perpendicular to the surface of the support.

At the transition to the support, ribs which protrude radially can be provided on the fixing pin in order to increase the stability of the fixing pin.

In a first preferred embodiment, the radially thickened head is produced by the free end portion being deformed by a forming process after the control motor is plugged onto the fixing pin. Accordingly, prior to the forming, the diameter of the free end portion is still smaller than the diameter of the through opening, and therefore the control motor can be simply plugged onto the fixing pins. The free end portion is formed preferably only using the fixing pin material that protrudes beyond the through opening.

After the forming, the radially thickened head is advantageously located in the axial direction so close to the end of the through opening in the control motor that the latter is held on the support in a substantially play-free manner.

The forming process used is advantageously a heat deformation process, wherein the material of the fixing pin is preferably a thermoplastic.

In another preferred embodiment, the head comprises two latching arms which are movable in the radial direction, can be designed in particular as latching hooks and which, after the control motor is plugged on, reach behind an edge in the through opening and thus fix the control motor to the support. The two latching arms preferably extend here as an extension of the rest of the fixing pin. The free end portion of the fixing pin can be divided, for example, into two arms which can be deflected radially inwards, are moved towards each other through the inner wall of the through opening during the plugging-on of the control motor and, after passing through the through opening, snap back into their starting position and then engage behind the edge of the opening with a latching edge and thus fix the control motor on the support.

If the control motor is intended to be replaced after the initial installation, then, advantageously, the radially thickened head is severed from the fixing pin, and therefore the control motor can simply be pulled off from the fixing pin.

For this purpose, the head is provided, for example, with a non-circular, torque-transmitting tool engagement surface. The latter can be in particular a polygonal outer surface or a polygonal inner surface or else a plug-in opening for a slot-head or Phillips screwdriver. By application of a torque by means of a suitable tool, for example a spanner, an Allen key or a screwdriver, it is thus possible to precisely shear off the head.

For this purpose, according to the invention, the fixing pin has a predetermined breaking point which lies below the head and at which the head can be severed from the free end portion of the fixing pin. The predetermined breaking point ensures that the fixing pin breaks exactly at the designated point during a targeted action of force.

The fixing pin preferably has a central opening which runs in the axial direction and which is closed prior to the twisting off of the head and only subsequently is exposed. Consequently, the opening extends at least as far as the predetermined breaking point. After the radially thickened head has been severed, a screw can be screwed into said opening, the screw fixing the replacement control motor to the support. Advantageously, the opening is exposed by breaking off or shearing off the radially thickened head of the fixing pin at the predetermined breaking point.

The opening can run cylindrically in the axial direction or can be of conical design in order to ensure secure engagement of a screw. In the non-formed fixing pin and in the case of a fixing pin in which the radially thickened head is still present, the opening ends at the predetermined breaking point preferably facing the support and does not extend into the remaining free end portion, in order to ensure a neat deformation of the end portion to form the radially thickened head. The opening can extend towards the support as far as the upper side of the support, but it could also already end beforehand. This is dependent inter alia on the length of screw used.

In order to simplify the axial positioning of the control motor with respect to the support, the fixing pin preferably has a shoulder on which the control motor rests when the latter is placed onto the fixing pin.

The predetermined breaking point preferably lies level with the shoulder, which facilitates reliable manufacturing of the predetermined breaking point.

Normally, a plurality of fixing pins with the radially thickened head are provided, for example four fixing pins which are arranged on both side of the control motor and which, in addition to the axial fixing of the control motor, also ensure exact positioning of the control motor in the lateral direction.

The installation of the control motor on an above-described motor fastening results in an assembly in which the control motor is placed onto the fixing pins of the motor fastening. The fixing pins protrude through the through openings in the control motor, wherein the radially thickened heads fix the control motor on the support in the axial direction. As already described above, the radially thickened heads are arranged in such a manner, for example by a heat forming process which deforms the material of the free end portion of the respective fixing pin, or by the selection of the axial position of the latching edges of the latching arms, that the control motor is held in the axial direction on the support in a substantially play-free manner. Via the horizontal positioning by the fixing pins a play-free mounting of the control motor in the lateral direction is also provided.

This control motor assembly can either be a separate component which is fitted onto a housing, or the support, as described above, can be an integral part of a housing.

In order to fasten the control motor to an above-described motor fastening, a method with the following steps can be provided:
- the control motor is placed on the at least one fixing pin of the motor fastening in such a manner that the free end portion of the fixing pin protrudes through the through opening, and
- the free end portion is formed into a head which has a larger diameter than the through opening, i.e. is radially thickened, in order to fix the control motor to the motor fastening.

At the same time as the forming of the free end portion into the radially thickened head, a tool engagement surface is advantageously formed on the head, for example a polygonal stub or a polygonal socket, and therefore a tool can act with sufficient leverage in order to sever the fixing pin at the predetermined breaking point.

If it is intended to replace the control motor which is plugged on at least one fixing pin of an above-described motor fastening, wherein the free end portion of the fixing pin has a radially thickened head which is formed integrally with the end portion and holds the control motor axially on the motor fastening, the following steps can be carried out:
- a tool is fitted on the tool engagement surface on the head in order to break off or shear off the head at a predetermined breaking point, wherein the central opening in the fixing pin is exposed,
- the previous control motor is removed from the fixing pin,
- a new control motor is plugged onto the fixing pin, and
- the new control motor is fastened to the fixing pin with a screw, wherein the screw engages through the through opening in the control motor into the central opening in the fixing pin.

In this manner, despite the initial installation which has taken place mechanically and takes place without the use of screws, simple and rapid replacement of the control motor is possible, in which precise positioning of the new control motor on the motor fastening is provided.

The invention is described in more detail below using two exemplary embodiments with reference to the attached drawings. In the drawings:
- Figure 1 shows a first embodiment of a control motor assembly according to the invention during the initial installation according to the invention of the control motor:
- Figure 2 shows a motor fastening according to the invention as used in the control motor assembly from Figure 1;
- Figure 3 shows a schematic sectional view of a fixing pin of the motor fastening from Figure 2;
- Figure 4 shows the control motor assembly from Figure 1 after the forming of the free end portions of the fixing pins in accordance with a method according to the invention;
- Figure 5 shows a schematic partial sectional view of the control motor assembly according to the invention during a method according to the invention for the replacement of the control motor;
- Figure 6 shows a method step of said method in a schematic perspective illustration;
- Figures 7 and 8 show the motor fastening from Figure 2 with a replacement control motor in a perspective illustration and in a sectional view; and
- Figure 9 shows a motor fastening according to the invention with a placed-on control motor according to a second embodiment.

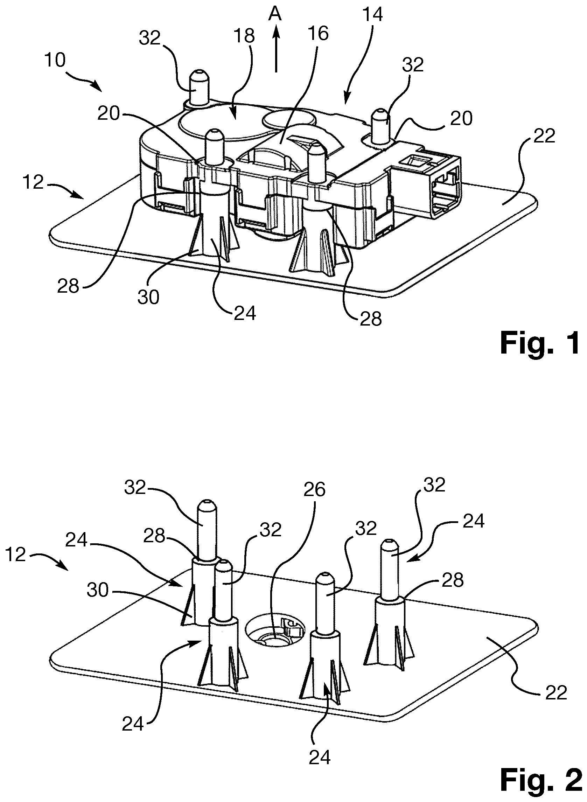

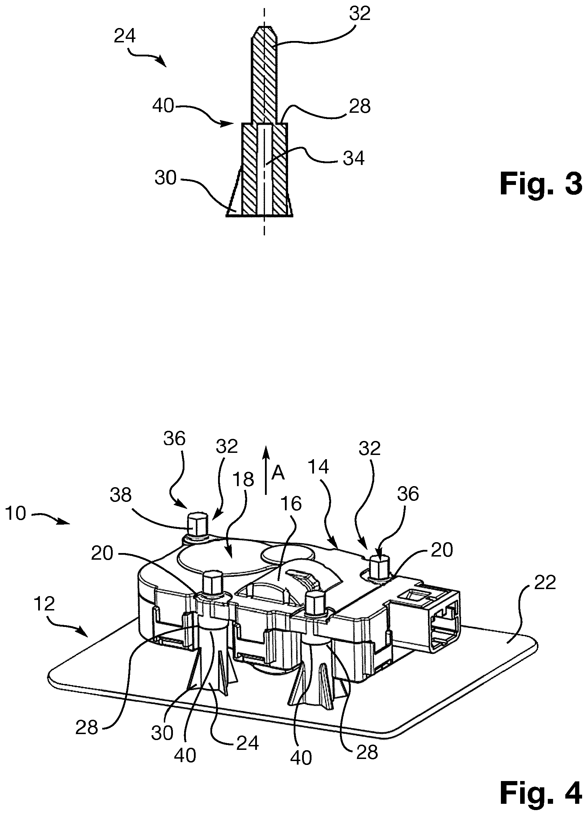

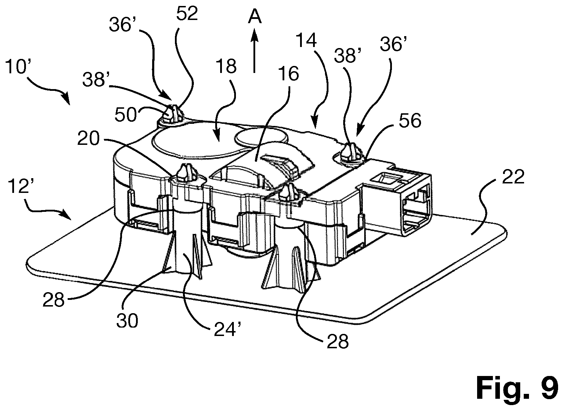

Figures 1 to 8 show a control motor assembly 10 and a motor fastening 12 according to a first embodiment, whilst Figure 9 shows a control motor assembly 10' according to a second embodiment.

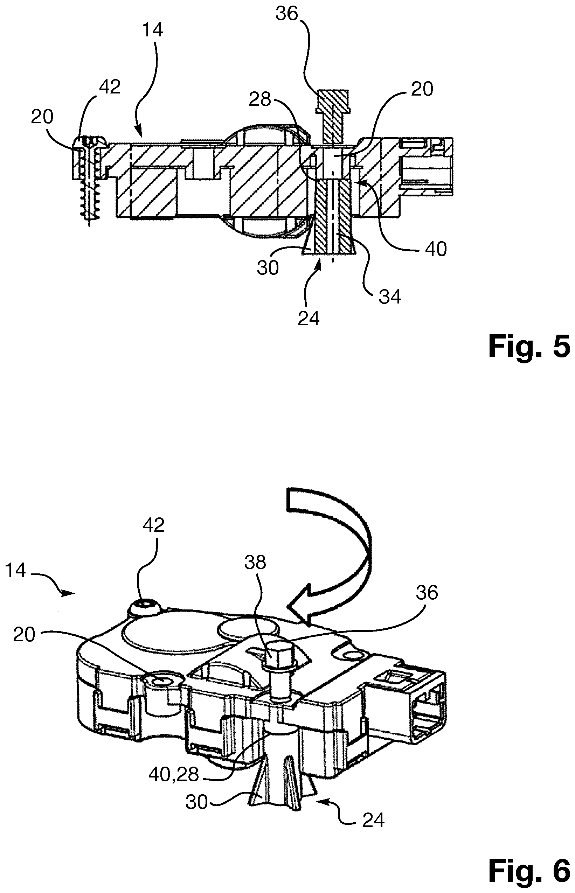

The control motor assembly 10 consists here of the motor fastening 12 and a control motor 14 fastened thereto. In this example, in addition to the actual drive 16, which can be an electric motor, for example a servomotor or stepper motor, the control motor 14 also comprises a plug socket and also the rest of the electrical contact connection of the actual drive 16 in order to supply the latter with power, and also a housing 18 in which the drive 16 is accommodated and which has a plurality of fastening elements on its circumferential edge, said fastening elements each comprising a through opening 20 (also see Figure 6). The through openings 20 are formed here at the axially upper edge of the housing 18 of the control motor 14 in cylindrical sockets in the housing 18 (also see Figure 6) .

The motor fastening 12 comprises a plate-like support 22 from which a plurality of fixing pins 24 protrude. In this example, four individual fixing pins 24 are provided which each protrude perpendicularly from the support 22 and which are distributed over the surface of the support 22. All four fixing pins 24 are oriented parallel to one another. All of the fixing pins 24 are formed here from a suitable plastic, for example a thermoplastic, integrally with the support 22 in an injection-moulding process.

The support 22 is provided with an opening 26 through which, in the mounted state, a spindle (not illustrated) of an adjustable flap in an air duct or a distributor housing of a vehicle heating, ventilating and/or air-conditioning system can protrude, said spindle being connected to the drive 16 of the control motor 14 when the control motor 14 is mounted on the motor fastening 12.

The entire motor fastening 12 can already be integrated in the wall of a component, for example of an air duct or a distributor housing, but can also be manufactured as a separate part and subsequently fitted onto a component.

For the fastening of the control motor 14 on the motor fastening 12, the control motor 14 is placed onto the fixing pins 24 in such a manner that the latter protrude through the through openings 20. The fixing pins 24 ensure an exact lateral positioning of the control motor 14, and therefore a spindle protruding through the opening 26 in the support 22 comes exactly into engagement with a drive pinion of the drive 16.

Each fixing pin 24 has a shoulder 28 on which the control motor 14 rests, and therefore the axial position of the control motor 14 with respect to the motor fastening 12 is also exactly predetermined.

At the transition to the support 22, a plurality of radially protruding triangular supporting ribs 30 are provided on each fixing pin 24 and serve to increase the lateral stability of the fixing pin 24. The supporting ribs 30 end axially below the shoulder 28 and do not come into contact with the control motor 14.

Above the shoulder 28, the fixing pin 24 tapers, and therefore its diameter is smaller than that of the shoulder 28 and forms a solid free end portion 32. During the initial installation of a control motor 14, said end portion is initially of a length such that it projects clearly beyond an axially upper edge of the through opening 20 in the control motor 14, as can be seen in Figure 1. The free end portion 32 tapers towards its free end, but is otherwise cylindrical.

In the interior of the fixing pin 24, a central opening 34 with a diameter which is cylindrical or tapers conically towards the support 22 runs from the shoulder 28 as far as the surface of the support 22, the object of which opening is also described further on.

After the control motor 14 has been placed on the fixing pins 24 and has therefore taken up its final position both in the axial direction A and also perpendicularly thereto in lateral directions, the free end portions 32 of the fixing pins 24 are formed by a suitable tool (not illustrated) in a heat forming process in such a manner that they take on the shape of a radially thickened head 36. The diameter of the head 36 is larger than that of the through opening 20, and therefore the control motor 14 can no longer be lifted off upwards from the fixing pins 24. The head 36 is formed axially so close to the upper edge of the through opening 20 that the control motor 14 is fixed in the axial direction A to the motor fastening 12 in a substantially play-free manner.

After this step, the installation of the control motor 14 on the motor fastening 12 is ended, and the control motor assembly 10 is finished.

A tool engagement surface 38, herein the form of a hexagon stub, is formed on the radially thickened head 36 during the forming.

If, after the initial installation, the control motor 14 in the vehicle air-conditioning system is intended to be replaced, a suitable tool is fitted to the tool engagement surface 38 of the head 36 and, via the lever action of said tool, the head 36 is sheared off or broken off (indicated in Figure 6), from the rest of the fixing pin 24.

The fixing pin 24 has a predetermined breaking point 40 which is arranged here in the region of the shoulder 28. At this point, the material of the fixing pin 24 tears or breaks, and the head 36 can be removed together with the rest of the free end portion 32 hanging integrally thereon. This is illustrated in Figures 5 and 6. By removal of the head 36, the central opening 34 in the interior of the fixing pin 24 is accessible.

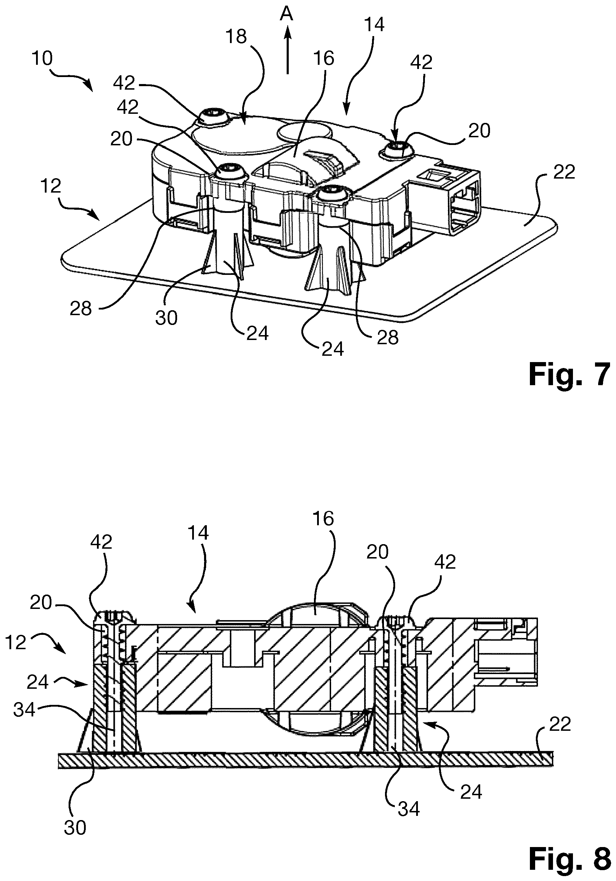

The old control motor 14 can now be lifted off from the fixing pins 24 and the motor fastening 12, and a new control motor 14 is placed onto the fixing pins 24 in such a manner that the through openings 20 rest on the shoulders 28 of the now shortened fixing pins 24. This is shown in Figure 7 and 8.

For the fastening of the new control motor 14, a screw 42 is now plugged through the through opening 20 and screwed into the central opening 34. The inner diameter of the central opening 34 is of course selected here in such a manner that the screw can grip securely. Since the motor fastening 12 including the fixing pins 24 is injection moulded from a plastic, the screws 42 can cut into the wall of the central opening 34 and are thus securely held in the fixing pin 24. In this manner, the replaced control motor 14 can be securely fixed to the motor fastening 12 by screw connections at all of the fixing pins 24 which are present.

Figure 9 shows a second embodiment. In contrast to the first embodiment instead of an initially cylindrical end portion 32 running rectilinearly, the fixing pins 24' already have a radially thickened head 36' formed at their upper end.

The head 36' consists of two latching arms 50, 52 which both extend in the axial direction A and can be pivoted radially towards each other. The latching arms 50, 52 each have a bevel 54 at their upper end and a latching surface 56 at their axially lower end, i.e. directed towards the support 22, said latching surface protruding radially over the axially adjoining region (not illustrated) of the fixing pin 24'.

During the initial installation of the control motor 14, the latter is placed with the through openings 20 onto the heads 36' of the fixing pins 24' and pushed in the direction of the support 22. The two latching arms 50, 52 are pressed radially inwards towards each other here such that the diameter of the head 36' is temporarily reduced and the through openings 20 can pass the head 36'. After the axially upper edge of the through opening 20 has released the latching surfaces 56 again, the latching arms 50, 52 snap apart again radially, and the latching surfaces 56 engage over the edge of through opening 20. In this manner, the control motor 14 is fixed securely and without play on the motor fastening 12' by means of a single push-in movement.

If the control motor 14 is intended to be replaced, the head 36' is removed with a suitable tool, for example by a screwdriver being introduced into the gap between the latching arms 50, 52 and a torque being applied which breaks off or shears off the latching arms 50, 52. The gap serves here as a tool engagement surface 38' .

Also in this case, a predetermined breaking point (not illustrated separately here) at which the latching arms 50, 52 break off is provided level with the shoulder 28 below the latching surface 56. As in the previously described exemplary embodiment, a central opening in the interior of the fixing pin 24' is accessible, into which, after the old control motor 14 is removed and a new replacement control motor 14 is placed on, screws are screwed in order to fasten the new control motor 14 to the remaining parts of the fixing pins 24'.

## Claims

1. Motor fastening of a control motor (14) in a vehicle heating, ventilating and/or air-conditioning system, with a plate-like support (22) on which at least one fixing pin (24; 24') is provided which protrudes from the support (22) and serves to be plugged through a through opening (20) in the control motor (14), wherein the fixing pin (24; 24') has a free end portion (32) which protrudes beyond the through opening (20) in the control motor (14) and which, in the mounted state, has a radially thickened head (36; 36') for the axial holding of the control motor (14) and which is an integral part of the fixing pin (24; 24') **characterized in that** the fixing pin (24; 24') has a predetermined breaking point (40) which lies below the head (36; 36').

2. Motor fastening according to Claim 1, **characterized in that** the fixing pin (24; 24') has a central opening (34) which extends at least as far as the predetermined breaking point and is exposed after the end portion is broken off.

3. Motor fastening according to one of the preceding claims, **characterized in that** the free end portion (32) is deformed to form a radially thickened head (36) by means of a forming process.

4. Motor fastening according to one of the preceding claims, **characterized in that** the head (36') comprises two latching arms (50, 52), in particular latching hooks, which are movable in the radial direction and, after the control motor (14) is plugged on, engage behind an edge of the through opening (20).

5. Motor fastening according to one of the preceding claims, **characterized in that** the head (36; 36') has a non-circular, torque-transmitting tool engagement surface (38; 38'), in particular a polygonal outer surface or a plug-in opening for a screwdriver.

6. Motor fastening according to one of the preceding claims, **characterized in that** the fixing pin (24; 24') has a shoulder (28) on which the control motor (14) rests when the latter is placed onto the fixing pin (24; 24').

7. Motor fastening according to one of the preceding claims, **characterized in that** a plurality of fixing pins (24; 24') with a radially thickened head (36; 36') are provided.

8. Control motor assembly with a motor fastening (12; 12') according to one of the preceding claims, wherein a plurality of fixing pins (24; 24') are provided, and with a control motor (14) which is placed onto the fixing pins (24; 24') such that the fixing pins (24; 24') protrude through the through openings (20) in the control motor (14), wherein the radially thickened heads (36; 36') fix the control motor (14) on the motor fastening (12; 12') in the axial direction (A).

9. Method for fastening a control motor (14) to a motor fastening (12) according to one of the preceding claims, unless referred back to Claim 3, **characterized by** the following steps:
- the control motor (14) is placed onto the at least one fixing pin (24) of the motor fastening (12) in such a manner that the free end portion (32) of the fixing pin (24) protrudes through the through opening (20), and
- the free end portion (32) is formed into a head (36) which has a larger diameter than the through opening (20), in order to fix the control motor (14) to the motor fastening (12).

10. Method according to Claim9, **characterized in that**, during the forming of the free end portion (32), a tool engagement surface (38) is formed on the head (36).

11. Method for replacing a control motor (14) which is fixed on a motor fastening (12; 12') according to one of Claims 1 to 7, wherein the control motor (14) is plugged onto the at least one fixing pin (24; 24') of the motor fastening (12; 12'), and the free end portion (32) of the fixing pin (24; 24') has a radially thickened head (36; 36') which is formed integrally with the end portion (32) and holds the control motor (14) axially in the motor fastening (12; 12'), with the following steps:
- a tool is fitted on a tool engagement surface (38; 38') on the head (36; 36') in order to sever the head (36; 36') at a predetermined breaking point (40), wherein a central opening (34) in the fixing pin (24; 24') is exposed,
- the previous control motor (14) is removed from the fixing pin (24; 24'),
- a new control motor (14) is plugged onto the fixing pin (24; 24'), and
- the new control motor (14) is fastened to the fixing pin (24; 24') with a screw (42), wherein the screw (42) engages through the through opening (20) in the control motor (14) into the central opening (34) in the fixing pin (24; 24').

## Patentansprüche

1. Motorbefestigung eines Stellmotors (14) in einem Fahrzeugheizungs-, -Lüftungs- und/oder -Klimasystem mit einem plattenförmigen Träger (22), auf dem wenigstens ein Fixierstift (24; 24') vorgesehen ist, der vom Träger (22) absteht und der dazu dient, durch eine Durchgangsöffnung (20) des Stellmotors (14) gesteckt zu werden, wobei der Fixierstift (24; 24') einen freien Endabschnitt (32) aufweist, der über die Durchgangsöffnung (20) des Stellmotors (14) übersteht und der im montierten Zustand einen radial verdickten Kopf (36; 36') zum axialen Halten des Stellmotors (14) aufweist und der einstückiger Bestandteil des Fixierstifts (24; 24') ist; **dadurch gekennzeichnet, dass** der Fixierstift (24; 24') eine Sollbruchstelle (40) aufweist, die unterhalb des Kopfes (36; 36') liegt.

2. Motorbefestigung nach Anspruch 1, **dadurch gekennzeichnet, dass** der Fixierstift (24; 24') eine sich bis zumindest zur Sollbruchstelle erstreckende und nach Abbrechen des Endabschnitts freiliegende zentrale Öffnung (34) aufweist.

3. Motorbefestigung nach einem der vorstehenden Ansprüche, **dadurch gekennzeichnet, dass** der freie Endabschnitt (32) zu einem durch einen Umformprozess radial verdickten Kopf (36) verformt ist.

4. Motorbefestigung nach einem der vorstehenden Ansprüche, **dadurch gekennzeichnet, dass** der Kopf (36') zwei in Radialrichtung bewegliche Rastarme (50, 52), insbesondere Rasthaken, umfasst, die nach dem Aufstecken des Stellmotors (14) einen Rand der Durchgangsöffnung (20) hintergreifen.

5. Motorbefestigung nach einem der vorstehenden Ansprüche, **dadurch gekennzeichnet, dass** der Kopf (36; 36') eine unrunde, Drehmoment übertragende Werkzeugangriffsfläche (38; 38') hat, insbesondere eine Mehrkant-Außenfläche oder eine Einstecköffnung für einen Schraubendreher.

6. Motorbefestigung nach einem der vorstehenden Ansprüche, **dadurch gekennzeichnet, dass** der Fixierstift (24; 24') eine Schulter (28) aufweist, auf der der Stellmotor (14) aufliegt, wenn er auf den Fixierstift (24; 24') aufgesetzt ist.

7. Motorbefestigung nach einem der vorstehenden Ansprüche, **dadurch gekennzeichnet, dass** mehrere Fixierstifte (24; 24') mit radial verdicktem Kopf (36; 36') vorgesehen sind.

8. Stellmotor-Baugruppe mit einer Motorbefestigung (12; 12') nach einem der vorstehenden Ansprüche, wobei mehrere Fixierstifte (24; 24') vorgesehen sind, und mit einem Stellmotor (14), der auf die Fixierstifte (24; 24') aufgesetzt ist, sodass die Fixierstifte (24; 24') durch die Durchgangsöffnungen (20) des Stellmotors (14) ragen, wobei die radial verdickten Köpfe (36; 36') den Stellmotor (14) in Axialrichtung (A) an der Motorbefestigung (12; 12') fixieren.

9. Verfahren zum Befestigen eines Stellmotors (14) an einer Motorbefestigung (12) nach einem der vorstehenden Ansprüche, soweit nicht auf Anspruch 3 zurückbezogen, **gekennzeichnet durch** die folgenden Schritte:
- der Stellmotor (14) wird auf den wenigstens einen Fixierstift (24) der Motorbefestigung (12) so aufgesetzt, dass der freie Endabschnitt (32) des Fixierstifts (24) durch die Durchgangsöffnung (20) ragt, und
- der freie Endabschnitt (32) wird zu einem Kopf (36) umgeformt, der einen größeren Durchmesser als die Durchgangsöffnung (20) hat, um den Stellmotor (14) an der Motorbefestigung (12) zu fixieren.

10. Verfahren nach Anspruch 9, **dadurch gekennzeichnet, dass** beim Umformen des freien Endabschnitts (32) am Kopf (36) eine Werkzeugangriffsfläche (38) ausgebildet wird.

11. Verfahren zum Austausch eines Stellmotors (14), der auf einer Motorbefestigung (12; 12") nach einem der Ansprüche 1 bis 7 fixiert ist, wobei der Stellmotor (14) auf den wenigstens einen Fixierstift (24; 24') der Motorbefestigung (12; 12') aufgesteckt ist und der freie Endabschnitt (32) des Fixierstifts (24; 24') einen einstückig mit dem Endabschnitt (32) ausgebildeten, radial verdickten Kopf (36; 36') aufweist, der den Stellmotor (14) axial an der Motorbefestigung (12; 12') hält, mit den folgenden Schritten:
- ein Werkzeug wird an einer Werkzeugangriffsfläche (38; 38') am Kopf (36; 36') angesetzt, um den Kopf (36; 36') an einer Sollbruchstelle (40) abzutrennen, wobei eine zentrale Öffnung (34) im Fixierstift (24; 24') freigelegt wird,
- der bisherige Stellmotor (14) wird vom Fixierstift (24; 24') abgenommen,
- ein neuer Stellmotor (14) wird auf den Fixierstift (24; 24') aufgesteckt und
- der neue Stellmotor (14) wird mit einer Schraube (42) am Fixierstift (24; 24") befestigt, wobei die Schraube (42) durch die Durchgangsöffnung (20) des Stellmotors (14) hindurch in die zentrale Öffnung (34) des Fixierstifts (24; 24') eingreift.

## Revendications

1. Fixation de moteur d'un moteur de commande (14) dans une installation de chauffage, de ventilation et/ou de climatisation de véhicule, avec un support (22) en forme de plaque sur lequel au moins une broche de fixation (24 ; 24') est disposée qui fait saillie du support (22) et sert à être enfichée à travers une ouverture de passage (20) dans le moteur de commande (14), la broche de fixation (24 ; 24') ayant une partie d'extrémité libre (32) qui fait saillie au-delà de l'ouverture de passage (20) du moteur de commande (14) et qui, à l'état monté, a une tête (36 ; 36') épaissie radialement pour le maintien axial du moteur de commande (14) et qui fait partie intégrante de la broche de fixation (24 ; 24'), **caractérisée en ce que** la broche de fixation (24 ; 24') a un point de rupture (40) prédéfini qui se trouve sous la tête (36 ; 36').

2. Fixation de moteur selon la revendication 1, **caractérisée en ce que** la broche de fixation (24 ; 24') a une ouverture centrale (34) qui s'étend au moins jusqu'au point de rupture prédéfini et qui est exposée après la rupture de la partie d'extrémité.

3. Fixation de moteur selon l'une des revendications précédentes, **caractérisée en ce que** la partie d'extrémité libre (32) est déformée pour former une tête (36) épaissie radialement au moyen d'un procédé de formation.

4. Fixation de moteur selon l'une des revendications précédentes, **caractérisée en ce que** la tête (36') comprend deux bras de verrouillage (50, 52), en particulier des crochets de verrouillage, qui sont mobiles dans la direction radiale et, après que le moteur de commande (14) est branché, viennent en prise derrière un bord de l'ouverture de passage (20).

5. Fixation de moteur selon l'une des revendications précédentes, **caractérisée en ce que** la tête (36 ; 36') a une surface de mise en prise d'outil (38 ; 38') non circulaire, transmettant le couple, en particulier une surface extérieure polygonale ou une ouverture d'enfichage pour un tournevis.

6. Fixation de moteur selon l'une des revendications précédentes, **caractérisée en ce que** la broche de fixation (24 ; 24') a un épaulement (28) sur lequel le moteur de commande (14) repose lorsque ce dernier est placé sur la broche de fixation (24 ; 24').

7. Fixation de moteur selon l'une des revendications précédentes, **caractérisée en ce qu'**une pluralité de broches de fixation (24 ; 24') avec une tête (36 ; 36') épaissie radialement est fournie.

8. Ensemble moteur de commande avec une fixation de moteur (12 ; 12') selon l'une des revendications précédentes, une pluralité de broches de fixation (24 ; 24') étant fournies, et avec un moteur de commande (14) qui est placé sur les broches de fixation (24 ; 24') de sorte que les broches de fixation (24 ; 24') fassent saillie à travers les ouvertures de passage (20) dans le moteur de commande (14), les têtes (36 ; 36') épaissies radialement fixant le moteur de commande (14) sur la fixation de moteur (12 ; 12') dans la direction axiale (A) .

9. Procédé de fixation d'un moteur de commande (14) sur une fixation de moteur (12) selon l'une des revendications précédentes, à moins qu'elle ne renvoie à la revendication 3, **caractérisé par** les étapes suivantes :
le moteur de commande (14) est placé sur l'au moins une broche de fixation (24) de la fixation de moteur (12) de sorte que la partie d'extrémité libre (32) de la broche de fixation (24) fasse saillie à travers l'ouverture de passage (20), et
la partie d'extrémité libre (32) est formée en une tête (36) qui a un diamètre plus grand que l'ouverture de passage (20), afin de fixer le moteur de commande (14) à la fixation de moteur (12).

10. Procédé selon la revendication 9, **caractérisé en ce que**, pendant la formation de la partie d'extrémité libre (32), une surface de mise en prise d'outil (38) est formée sur la tête (36).

11. Procédé de remplacement d'un moteur de commande (14) qui est fixé sur une fixation de moteur (12 ; 12') selon l'une des revendications 1 à 7, le moteur de commande (14) étant enfiché sur l'au moins une broche de fixation (24 ; 24') de la fixation de moteur (12 ; 12'), et la partie d'extrémité libre (32) de la broche de fixation (24 ; 24') ayant une tête (36 ; 36') épaissie radialement, qui est formée d'un seul tenant avec la partie d'extrémité (32) et maintient le moteur de commande (14) axialement dans la fixation de moteur (12 ; 12'), avec les étapes suivantes :
un outil est monté sur une surface de mise en prise d'outil (38 ; 38') sur la tête (36 ; 36') afin de sectionner la tête (36 ; 36') au niveau d'un point de rupture (40) prédéfini, une ouverture centrale (34) dans la broche de fixation (24 ; 24') étant exposée,
le moteur de commande (14) précédent est retiré de la broche de fixation (24 ; 24'),
un nouveau moteur de commande (14) est branché sur la broche de fixation (24 ; 24'), et
le nouveau moteur de commande (14) est fixé à la broche de fixation (24 ; 24') par une vis (42), la vis (42) venant en prise à travers l'ouverture de passage (20) dans le moteur de commande (14) dans l'ouverture centrale (34) dans la broche de fixation (24 ; 24').
